(19) Europäisches Patentamt
European Patent Office
Office européen des brevets

(11) Veröffentlichungsnummer: **0 272 513 B1**

## (12) EUROPÄISCHE PATENTSCHRIFT

(45) Veröffentlichungstag der Patentschrift: 21.08.91

(51) Int. Cl.5: **H04M 3/24**, H04Q 11/04

(21) Anmeldenummer: 87117918.0

(22) Anmeldetag: 03.12.87

(54) Verfahren zur Prüfung eines Schnittstellenbausteins.

(30) Priorität: 17.12.86 DE 3643112

(43) Veröffentlichungstag der Anmeldung:
29.06.88 Patentblatt 88/26

(45) Bekanntmachung des Hinweises auf die
Patenterteilung:
21.08.91 Patentblatt 91/34

(84) Benannte Vertragsstaaten:
AT BE CH DE FR GB IT LI NL SE

(56) Entgegenhaltungen:

NACHRICHTEN TELEFONBAU UND NORMAL-
ZEIT, Nr. 86, 1984, Seiten 46-54, Dreieich, DE;
G. ZAPEL et al.: "EWSD-Projektierung am
Beispiel einer Test-Vermittlungsstelle"

TELCOM REPORT, Band 8, Nr. 5,
September/Oktober 1985, Seiten 321-326,
Berlin, DE; F. HLAWA: "Wartung von PCM-
Anschlüssen im System EWSD"

(73) Patentinhaber: **Siemens Aktiengesellschaft**
**Wittelsbacherplatz 2**
**W-8000 München 2(DE)**

(72) Erfinder: **Steis, Bruno, Dipl.-Ing.**
**Grosshadernerstrasse 25**
**W-8000 München 70(DE)**
Erfinder: **Jugel, Alfred**
**Priessnitzweg 13**
**W-8192 Geretsried(DE)**
Erfinder: **Martin, Horst, Dipl.-Phys.**
**Simmerlein-Platz 11**
**W-8000 München 50(DE)**

**Beschreibung**

Die Erfindung betrifft ein Verfahren zur Prüfung eines Schnittstellenbausteins zur Verbindung einer PCM-Übertragungsstrecke eines digitalen Zeitmultiplex-Fernmeldesystems mit einer Vermittlungsstelle dieses Fernmeldesystems, der u.a. mit einer Reihe von unterschiedliche Kriterien der Informationsübertragung auf der PCM-Strecke bewertenden Überwachungsschaltungen und diesen gegebenenfalls zugeordneten Fehlerzählern ausgestattet ist.

Ein solcher Schnittstellenbaustein ist in der Praxis als hochintegrierter Baustein ausgebildet und so konzipiert, daß er für einen universellen Einsatz geeignet ist. Er erfüllt dabei relativ komplexe Funktionen. Hierzu gehören neben der Anpassung des Streckentaktes an den Vermittlungtakt und die Anpassung des Streckenpulsrahmens an den Pulsrahmen der Vermittlungsstelle u.a. in bezug auf empfangene Digitalsignale, die Funktionen der Entzerrung, der Pegelanpassung, der Streckentaktgewinnung, der Dekodierung des HDB3-Codes, des Ausblendens des Pulsrahmen-Meldewortes und bezogen auf abgehende Digitalsignale das Einfügen des Pulsrahmen-Kennungswortes und des Pulsrahmen-Meldewortes, der HDB3-Codierung sowie des Sendens des abgehenden Digitalsignals.

Bei einem vorgeschlagenen Diagnose- und Prüfkonzept werden einerseits Routineprüfungen während des bestehenden Vermittlungsbetriebs der Vermittlungsstelle und andererseits Diagnoseprüfungen durchgeführt, die insbesondere der Fehlerlokalisierung und der Überwachung im Einschaltfall dienen, und während deren Dauer kein Vermittlungsbetrieb besteht.

Von den Routineprüfungen sind im vorgeschlagenen Fall in erster Linie die Bestandteile eines solchen Schnittstellenbausteins darstellenden Überwachungsschaltungen betroffen.

Zumindest ein Teil dieser Überwachungsschaltungen ist zur Überwachung auf Fehler einer Gruppe von Fehlern zusammengefaßt, die derselben Fehlerkategorie angehören und dementsprechend auch dieselbe Reaktion erfordern. Die Zusammenfassung erfolgt derart, daß diese Überwachungsschaltungen gemeinsam ein Alarmsignal erzeugen, das dann allerdings keinen Hinweis darauf gibt, welcher Fehler innerhalb der betreffenden Kategorie nun gerade vorliegt.

Bei den Routineprüfungen des vorgeschlagenen Prüfkonzepts ist zwar der bestimmungsgemäße Betrieb des Schnittstellenbausteins nicht unterbrochen, während des Ablaufs solcher Routineprüfungen sind aber die Überwachungsschaltungen im Hinblick auf ihre Überwachungsaufgabe wirkungslos.

Die Aufgabe der Erfindung besteht nun darin, ein Verfahren anzugeben, das den Prüfablauf bei der Prüfung der Überwachungsschaltungen derart steuert, daß der bestimmungsgemäße Betrieb der Schnittstellenschaltung nicht unterbrochen wird und daß die Überwachungsschaltungen so kurz wie möglich ihrer Überwachungsaufgabe entzogen werden, wobei das Prüfungsergebnis möglichst zuverlässig auf das tatsächliche Vorliegen eines Fehlers hinweisen soll und auch solche Überwachungsschaltungen differenziert erfassen können soll, die in der erwähnten Weise zur Prüfung von Fehlern derselben Kategorie zusammengefaßt sind.

Erfindungsgemäß wird diese Aufgabe dadurch gelöst, daß die Prüfschaltungen während des unverändert fortdauernden bestimmungsgemäßen Betriebs des Schnittstellenbausteins auch dann wenn sie normalerweise wegen der Verwandtschaft der durch sie überwachten Kriterien mit durch eine oder mehrere andere Überwachungsschaltungen überwachten Kriterien zusammen mit diesen Überwachungsschaltungen nur ein gruppenindividuelles Alarmsignal abgeben, nacheinander einer Routineprüfung in der Form unterzogen werden, daß sie außer durch die von ihnen zu überwachenden Kriterien durch einem Fehler entsprechende Simulationsgrößen beaufschlagt werden, wobei im Falle der Abgabe eines Alarmsignals durch die Prüfschaltungen die Zufuhr von Simulationsgrößen unmittelbar unterbrochen wird und im Falle des einen Fehler bedeutenden Ausbleibens eines Alarmsignals wenigstens ein weiteres mal die Zufuhr von Simulationsgrößen wiederholt wird, und daß während der Prüfphase keine der für das Vorliegen eines tatsächlichen Fehlers vorgesehenen Maßnahmen ergriffen wird.

Nachstehend wird die Erfindung anhand eines Ausführungsbeispiels unter Bezugnahme auf eine Zeichnung näher erläutert.

In der Zeichnung zeigen:

Fig. 1  Schnittstellen derjenigen Art, auf die sich das erfindungsgemäße Verfahren bezieht, in ihrer Einordnung in ein digitales Zeitmultiplex-Fernmeldesystem,

Fig. 2  eine Reihe von Überwachungsschaltungen einer Schnittstelleneinheit in ihrer Zuordnung zu dem PCM-Übertragungssystem, zu deren Überwachung sie dienen und zu einer Steuerung, die deren Überprüfung bewirkt.

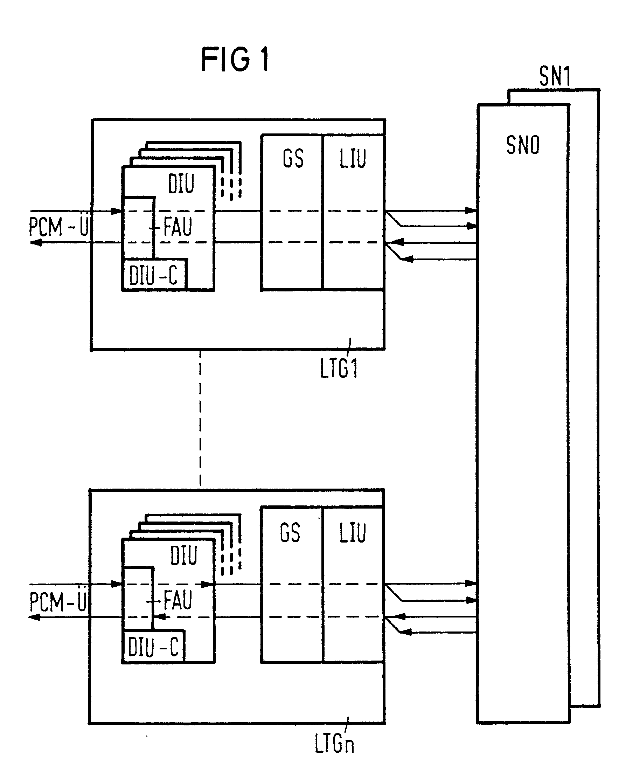

In der Figur 1 sind Teile einer Vermittlungsstelle eines digitalen Zeitmultiplex-Fernmeldenetzes dargestellt. Es sind dies ein gedoppeltes Koppelnetz SN sowie Anschlußgruppen LTG1 bis LTGn für den Anschluß von PCM-Übertragungsstrecken PCM-Ü, die Verbindungen zu weiteren solcher Vermittlungsstellen herstellen.

Die Anschlußgruppen LTG1 bis LTGn bestehen ihrerseits jeweils aus einer Schnittstelleneinheit LIU, über die eine Verbindung zum Koppelfeld SN hergestellt wird, ferner aus einem Gruppenkoppler GS sowie aus Schnittstelleneinheiten DIU für digitale Übertragungssysteme, deren eigentlicher Schnittstellenteil der Schnittstellenbaustein FAU ist, auf den sich das erfindungsgemäße Verfahren bezieht und der eine Verbindung zu einer der schon erwähnten PCM-Übertragungsstrecken PCM-Ü herstellt.

Der Schnittstellenbaustein FAU steht unter dem Steuereinfluß einer Steuerung DIU-C.

Eine Anschlußgruppe LTG kann bis zu vier Schnittstelleneinheiten DIU umfassen.

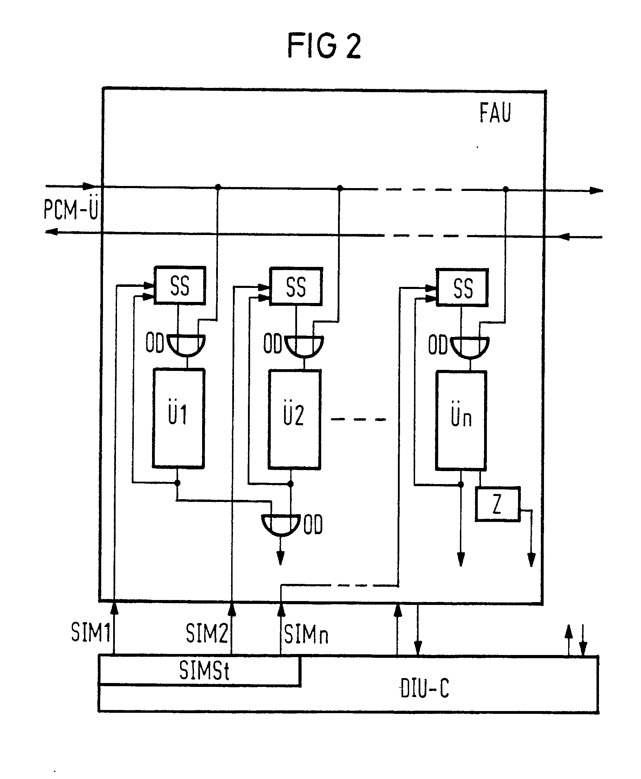

In der Figur 2 sind von einem Schnittstellenbaustein FAU lediglich die im Zusammenhang mit der Durchführung des Verfahrens interessierenden Teile dargestellt. Es sind dies in erster Linie Überwachungsschaltungen Ü1 bis Ün, die dazu dienen, unterschiedliche Kriterien der Informationsübertragung auf der PCM Strecke zu bewerten. So dient beispielsweise einer dieser Überwachungsschaltungen dazu, den ankommenden Bitstrom daraufhin zu überwachen, ob die Gesetzmäßigkeit des sogenannten HDB3-Codes wiederholt verletzt worden ist, eine weitere Überwachungsschaltung spricht an, wenn im ankommenden Bitstrom über längere Zeitspannen hinweg dauernd Bits des Binärwerts 1 auftreten, noch eine andere Überwachungsschaltung liefert dann einen Alarmsignal, wenn auf der Übertragungsstrecke überhaupt kein PCM-Signal auftritt.

Als weiteres Beispiel sei eine Überwachungsschaltung erwähnt, die den ankommenden Bitstrom auf das zeitgerechte Auftreten eines einen Überrahmen definierenden Codewortes überwacht und eine Überwachungsschaltung, die auf das ordnungsgemäße Auftreten von Rahmenkennungsworten aufprüft. Den Überwachungsschaltungen sind wie bei Ün angedeutet ein Fehlerzähler zugeordnet, wenn erst ein mehrfaches Auftreten eines Fehlers als unzulässiger Betriebszustand gewertet wird.

Die genannten Überwachungsschaltungen werden einerseits von den zu überwachenden Kriterien beaufschlagt, andererseits von Simulationsgrößen, die veranlaßt durch eine Simulationssteuerung SIMST, die hier als Bestandteil der Schnittstellensteuerung DIU-C dargestellt ist, geliefert werden. Die Beaufschlagung einerseits von den zu überwachenden Kriterien, andererseits durch den Fehlerfall entsprechende Simulationsgrößen ist in der Figur durch die Verwendung von ODER-Gliedern OD veranschaulicht, deren einer Eingang mit einer Ader der PCM-Übertragungsstrecke PCM-Ü in Verbindung steht und deren anderer Eingang mit dem Ausgang einer Simulationsschaltung SS verbunden ist.

Die Simulationsschaltungen SS liefern jeweils aufgrund eines von der Simulationssteuerung SIMSt abgegebenen Simulationsbefehls SIM1 bis SIM einem Fehlerfall entsprechende Simulationsgrößen derjenigen Kriterien ab, die von der zugeordneten Überwachungsschaltung Ü1 bis Ün zu überwachen sind.

Die Ausgänge der Überwachungsschaltungen Ü1 bis Ün, über die Alarmsignale im Falle eines Ansprechens der Überwachungsschaltung abgegeben werden, sind jeweils mit dem Rücksetzeingang der zugeordneten Simulationsschaltung SS verbunden. Hierdurch wird die Zufuhr von Simulationsgrößen unmittelbar nachdem die Überwachungsschaltung angesprochen hat, womit ihr ordnungsgemäßen Funktionieren feststeht, unterbrochen, so daß wieder eine normale Überwachung der Informationsübertragung stattfinden kann, was ja während der Phase der Überprüfung der Überwachungsschaltungen deswegen nicht möglich ist, weil während der Simulation die Abgabe von Alarmsignalen nicht zu der üblichen Reaktion, beispielsweise zu Abschaltmaßnahmen führt. Sofern eine Überwachungsschaltung auf der Zufuhr von Simulationsgrößen hin nicht anspricht, wird dies als Fehler der Überwachungsschaltung gewertet. Um jedoch sicher zu sein, daß tatsächlich eine Überwachungsschaltung nicht ordnungsgemäß arbeitet, wird die Zufuhr von Simulationsgrößen in einem solchen n-mal wenigstens jedoch 2-mal nacheinander wiederholt. Erst wenn die wiederholte Zufuhr eine Bestätigung des nicht ordnungsgemäßen Betriebs der Überwachungsschaltung ergeben hat, wird eine entsprechende Meldung und eine geeignete Schaltmaßnahme veranlaßt.

**Patentansprüche**

1. Verfahren zur Prüfung eines Schnittstellenbausteins zur Verbindung einer PCM-Übertragungsstrecke eines digitalen Zeitmultiplex-Fernmeldesystems mit einer Vermittlungsstelle dieses Fernmeldesystems, der u.a. mit einer Reihe von unterschiedlichen Kriterien der Informationsübertragung auf der PCM-Strecke bewertenden Überwachungsschaltungen und gegebenenfalls zugeordneten Fehlerzählern ausgestattet ist, **dahurch gekennzeichnet**, daß die Prüfschaltungen während des unverändert fortdauernden bestimmungsgemäßen Betriebs des Schnittstellenbausteins auch dann, wenn sie normalerweise wegen der Verwandtschaft der durch sie überwachten Kriterien mit durch eine oder mehrere andere Überwachungsschaltungen überwachten Kriterien zusammen mit diesen Überwachungsschaltungen nur ein gruppenindividuelles Alarmsignal abgeben, nacheinander einer Routineprüfung in der Form unterzogen werden, daß sie außer durch die von ihnen zu überwachenden Kriterien durch einem Fehler entsprechende Simulationsgrößen beaufschlagt werden, wobei im Falle der Abgabe eines Alarmsignals durch die Prüfschaltungen die Zufuhr von Simulationsgrößen unmittelbar unterbrochen wird und im Falle des einen Fehler bedeutenden Ausbleibens eines Alarmsignals wenigstens ein weiteresmal die Zufuhr von Simulationsgrößen wiederholt wird, und daß während der Prüfphase keine der für den Fall des Vorliegens eines tatsächlichen Fehlers vorgesehenen Maßnahmen ergriffen wird.

## Claims

1. Method for testing an interface unit for connecting a PCM tranmission link of a digital time-division multiplex telecommunication system to an exchange in this telecommunication system, which is equipped with, among other things, in a number of monitoring circuits evaluating different criteria of the information transmission on the PCM link and, if necessary, associated error counters, characterised in that the test links during the proper operation of the interface unit which continues unchanged, are successively subjected, even if they normally only emit a group-individual alarm signal because of the relationship of the criteria monitored by them with criteria monitored by one or more other monitoring circuits, together with these monitoring circuits, to a routine test of the form that, apart from the criteria to be monitored by them, simulation quantities corresponding to an error are applied to them, in which connection, in the case of the emission of an alarm signal by the test circuits, the supply of simulation quantities is directly interrupted and, in the case of the lack of an alarm signal signifying an error, the supply of simulation quantities is repeated at least one further time, and in that during the test phase none of the measures provided for the case of the presence of an actual error is taken.

## Revendications

1. Procédé pour contrôler un module d'interface destiné à raccorder une section de transmission MIC d'un système de télécommunication numérique à multiplexage temporel à un central de ce système de télécommunications, qui est équipé notamment d'une série de circuits de contrôle évaluant différents critères de la transmission d'informations dans la section MIC, et éventuellement de compteurs d'erreurs associés, caractérisé par le fait que les circuits de contrôle sont soumis successivement à un contrôle de routine, pendant le fonctionnement du module d'interface, qui se poursuit sans modification conformément aux spécifications, même lorsqu'ils délivrent normalement seulement un signal d'alarme prévu individuellement pour des groupes, sur la base de la parenté des critères, contrôlés par ces circuits de contrôle, à des critères contrôlés par un ou plusieurs autres circuits de contrôle, conjointement avec ces circuits de contrôle, par le fait que les circuits de contrôle sont chargés non seulement par les critères, qu'ils doivent contrôler, mais également par des grandeurs de simulation correspondant à une erreur, auquel cas, lors de la délivrance d'un signal d'alarme par les circuits de contrôle, l'envoi de grandeurs de simulation est immédiatement interrompue et, lors de l'absence, indiquant une erreur, d'un signal d'alarme, l'envoi de grandeurs de simulation est répétée au moins une autre fois, et par le fait que pendant la phase de contrôle, aucune des dispositions prévues dans le cas de la présence d'une erreur effective n'est prise.

## FIG 1

# FIG 2